# EUROPEAN PATENT APPLICATION

(11) **EP 2 961 155 A1**
(43) Date of publication of application: **30.12.2015**
(21) Application number: 15173066.0
(22) Date of filing: 22.06.2015
(51) Int. Cl.: H04N 5/232

(54) **A METHOD AND AN APPARATUS FOR IMAGE CAPTURING AND VIEWING**

(30) Priority: 24.06.2014 GB 201411165
(71) Applicant: Nokia Technologies Oy, 02610 Espoo (FI)
(72) Inventor: TARVAINEN, Tomi, 02730 Espoo (FI)
(74) Representative: Nokia Corporation

(57) **Abstract**

The invention relates to a method, comprising receiving a file storing at least image data and information on a focus point; generating a zoom effect for an image being represented by said image data, said zoom effect comprising image frames having a same resolution, wherein each image frame comprises a more zoomed content of the image than the previous image frame starting from a first frame comprising a full content of the image, proceeding towards the focus point and ending to a last frame comprising a portion of the content of the image. Further, there is a method comprising capturing an image by an imaging device, said imaging device being focused on a focus point in said image; determining an end point of a zoom; saving in a file the image data, an information on the focus point and an information of the end point of a zoom. The invention also relates to technical equipment for implementing a method.

## Description

### Technical Field

The present embodiments relate to a method for capturing images and viewing images. The embodiments also relate to an apparatus and a computer program product for capturing images and viewing images.

### Background

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Today, there are imaging technologies in great variety of devices. Because of this, photographing has become one of the popular ways to share memories, moments or stories between people. There are different kinds of applications giving a possibility to photographers to enhance the message the image provides, for example enhancing colours or modifying objects with different functions.

However, there is a need for an improved solution that gives a photographer a possibility to express his/her message with the image.

### Summary

Now there has been invented an improved method and technical equipment implementing the method, by which the above problems are alleviated. Various aspects of the invention include a method, an apparatus and a computer readable medium comprising a computer program stored therein, which are characterized by what is stated in the independent claims. Various embodiments of the invention are disclosed in the dependent claims.

According to a first aspect there is provided a method, comprising receiving a file storing image data and information on a used focus point; generating a zoom effect for an image being represented by said image data, said zoom effect comprising sequential image frames having a same resolution, wherein each image frame comprises a more zoomed view of the image than the previous image frame starting from a first frame comprising substantially a full content of the image, proceeding towards the focus point and ending to a last frame comprising a portion of the content of the image.

According to a second aspect, there is provided an apparatus comprising at least one processor, memory including computer program code, the memory and the computer program code configured to, with the at least one processor, cause the apparatus to perform at least the following: receiving a file storing image data and information on a used focus point; generating a zoom effect for an image being represented by said image data, said zoom effect comprising sequential image frames having a same resolution, wherein each image frame comprises a more zoomed view of the image than the previous image frame starting from a first frame comprising substantially a full content of the image proceeding towards the focus point and ending to a last frame comprising a portion of the content of the image.

According to a third aspect, there is provided a computer program product embodied on a non-transitory computer readable medium, comprising computer program code configured to, when executed on at least one processor, cause an apparatus or a system to receive a file storing image data and information on a used focus point; to generate a zoom effect for an image being represented by said image data, said zoom effect comprising sequential image frames having a same resolution, wherein each image frame comprises a more zoomed view of the image than the previous image frame starting from a first frame comprising substantially a full content of the image, proceeding towards the focus point and ending to a last frame comprising a portion of the content of the image.

According to an embodiment the last frame is determined by an elapsed time being set automatically or by a user from the start of the zoom.

According to an embodiment, the file being received comprises also information on an end point of zoom, wherein the last frame comprises such portion of the content that corresponds the end point of the zoom.

According to an embodiment the image frames are rendered to a display device.

According to an embodiment a video file is generated of said image frames.

According to an embodiment the resolution of the frames is selected to be the same or less than the resolution of the area near the focus point.

According to an embodiment the file is received from an imaging device.

According to an embodiment at least one of the information on the focus point and the end point of the zoom is stored to a metadata of the file.

According to a fourth aspect, there is provided a method comprising capturing an image by an imaging device, said imaging device being focused on a focus point in said image; determining an end point of a zoom; and saving in a file the image data, an information on the focus point and an information of the end point of a zoom.

According to a fifth aspect, there is provided an apparatus comprising at least one processor, memory including computer program code, the memory and the computer program code configured to, with the at least one processor, cause the apparatus to perform at least the following: capturing an image by an imaging device, said imaging device being focused on a focus point in said image; determining an end point of a zoom; and saving in a file the image data, an information on the focus point and an information of the end point of a zoom.

According to a sixth aspect, there is provided a computer program product embodied on a non-transitory computer readable medium, comprising computer program code configured to, when executed on at least one processor, cause an apparatus or a system to capture an image by an imaging device, said imaging device being focused on a focus point in said image; determine an end point of a zoom; and save in a file the image data, an information on the focus point and an information of the end point of a zoom.

According to an embodiment the focus point is e.g. the center point of the area, for which the camera focused for the captured image for example based on continuous-auto-focus, face detection or touch-to-focus etc.

According to an embodiment the end point of a zoom is determined automatically by a zooming coefficient and the information on the focus point.

According to an embodiment the end point of a zoom is determined by an area falling within certain pixels.

According to an embodiment the end point of a zoom is determined automatically based on a certain object in the image.

According to an embodiment the end point of a zoom is received as a user input.

According to an embodiment the user input comprises an area in the image that is to be zoomed.

### Description of the Drawings

In the following, various embodiments of the invention will be described in more detail with reference to the appended drawings, in which
- Fig. 1: shows a simplified block chart of an apparatus according to an embodiment;
- Fig. 2: shows a layout of an apparatus according to an embodiment;
- Fig. 3: shows a system configuration according to an embodiment;
- Fig. 4: shows an example of an image;
- Fig. 5: shows an example of a generating a zoom effect for an image;
- Fig. 6: shows a flowchart of a method according to an embodiment; and
- Fig. 7: shows a flowchart of a method according to an embodiment.

### Description of Example Embodiments

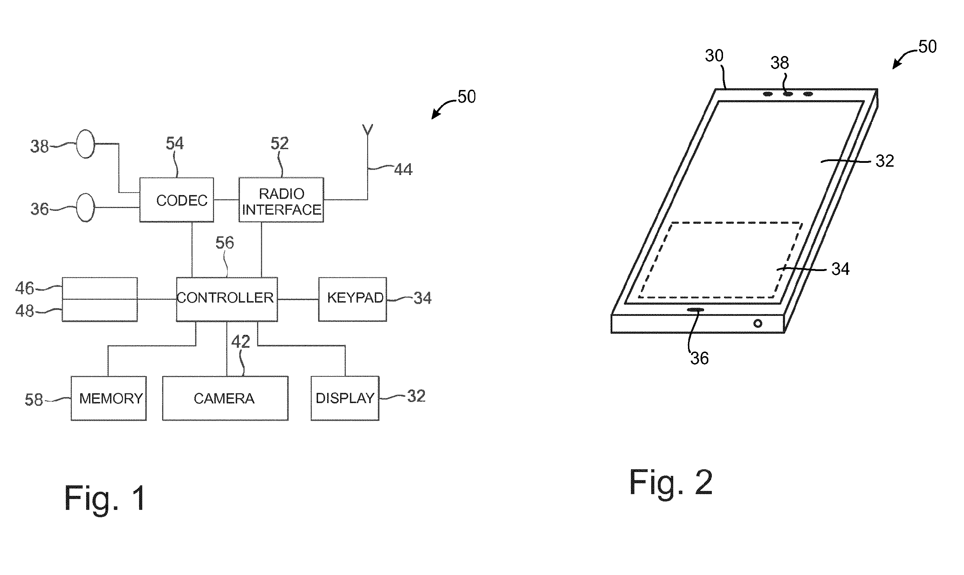

Figures 1 and 2 illustrate an apparatus according to an embodiment. The apparatus 50 is an electronic device for example a mobile terminal or a user equipment of a wireless communication system. The embodiments disclosed in this application can be implemented within any electronic device or apparatus which is able to process image data, such as still images, alternatively also video images. The apparatus 50 may comprise a housing 30 for incorporating and protecting the device. The apparatus 50 may further comprise a display 32 in the form of a liquid crystal display or LED (Light Emitting Diodes) display. According to an embodiment, the display may be any suitable display technology suitable to display an image or video. The apparatus 50 may further comprise a keypad 34. According to an embodiment, any suitable data or user interface mechanism may be employed. For example, the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device, which may be any of the following: an earpiece 38, a speaker or an analogue audio or digital audio output connection. The apparatus 50 may also comprise a battery (according to another embodiment, the device may be powered by any suitable mobile energy device, such as solar cell, fuel cell or clockwork generator). The apparatus may further comprise a camera 42 capable of recording or capturing images and/or video, or may be connected to one. The camera 42 may be capable of recording or detecting individual frames which are then passed to the codec 54 or controller for processing. According to an embodiment, the apparatus may receive the image data for processing from another device prior to transmission and/or storage. According to an embodiment, the apparatus 50 may receive either wirelessly or by a wired connection the image for processing. The camera 42 comprises an image sensor for converting an optical image into an electronic signal. The image sensor may be a CCD (Charge-Coupled Device) sensor or a CMOS (Complementary metal-oxide-semiconductor) sensor.

According to an embodiment, the apparatus 50 may further comprise an infrared port for short range line of sight communication to other devices. According to an embodiment, the apparatus 50 may further comprise any suitable short range communication solution such as for example a Bluetooth wireless connection or a USB/firewire wired solution.

The apparatus 50 may comprise a controller 56 or processor for controlling the apparatus. The controller 56 may be connected to memory 58 which, according to an embodiment, may store both data in the form of image and audio data and/or may also store instructions for implementation on the controller 56. The controller 56 may further be connected to codec circuitry 54 suitable for carrying out coding and decoding or audio and/or video data or assisting in coding and decoding carried out by the controller 56.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

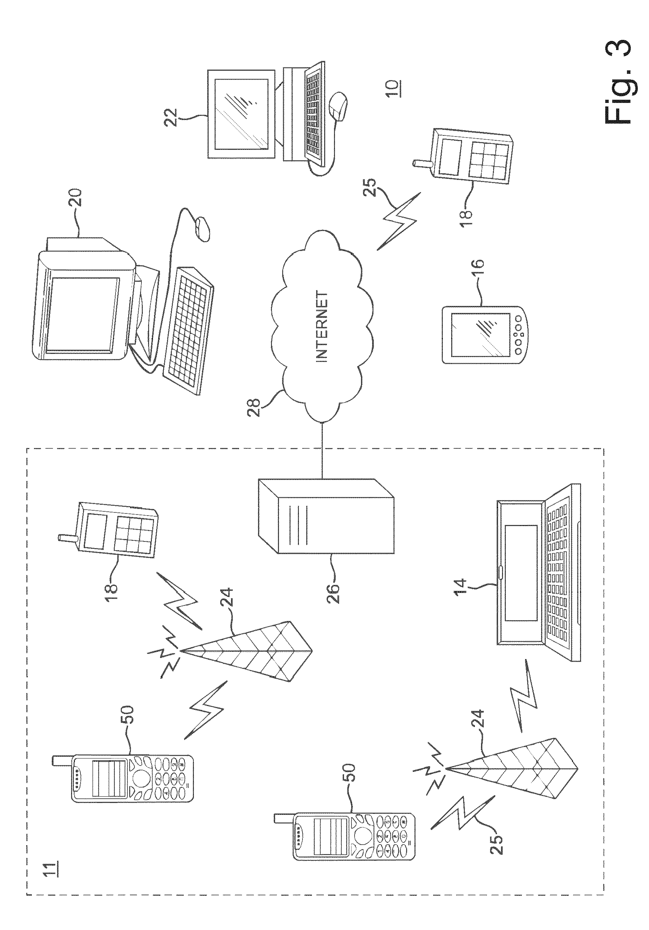

Figure 3 shows a system configuration comprising a plurality of apparatuses, networks and network elements according to an embodiment. The system 10 comprises multiple communication devices which can communicate through one or more networks. The system 10 may comprise any combination of wired or wireless networks including, but not limited to a wireless cellular telephone network (such as a GSM, UMTS, CDMA network, etc.), a wireless local area network (WLAN), such as defined by any of the IEEE 802.x standards, a Bluetooth personal area network, an Ethernet local area network, a token ring local area network, a wide area network, and the internet.

The system 10 may include both wired and wireless communication devices or apparatus 50 suitable for implementing present embodiments. For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include but are not limited to, an electronic device or apparatus 50, a combination of a personal digital assistant (PDA) and a mobile telephone 14, a PDA 16, an integrated messaging device (IMD) 18, a desktop computer 20, a notebook computer 22, a digital camera. The apparatus 50 may be stationary or mobile when carried by an individual who is moving. The apparatus 50 may also be located in a mode of transport.

Some of further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telephone system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio infrared, laser, cable connections or any suitable connection.

For many camera devices, it is known to automatically zoom a picture for a predetermined time after a snap, to help the photographer to check if the image is sharp. For example, a publication US 2012257072 discloses a smart-zoom that is based on a focus point in the image. Some of the known solutions record view finder frames and turn it to video so that the viewing experience is not "dead" by the moment before the picture is live. This problem with this and the other methods of capturing the emotion from the moment is the fact that the resulted still image is still "dead".

The present embodiments are targeted to a solution where viewer of an image is given indication of what part of the image a photographer considered interesting. This can be achieved by zooming the image towards a focus point, which creates an effect of watching a video. In particular, the present embodiments are targeted to very high resolution image sensors, such as in PureView cameras, which makes it possible to zoom a picture so that the zoomed picture is not pixelized.

In order to implement such a solution, a file that stores image data and information on a focus point is received by an application. According to an embodiment, the file comprises also information on an end point of a zoom. The end point of a zoom can be defined to be an area in the image content that is desired to be the zoomed content, i.e. the portion of the image content that is shown in a zoomed view. If the image size is 10000x7000, then the zoomed portion of the image content can represented by an area within pixels (x1, y1, x2, y2). Alternatively, the zoomed portion of the image content can be represented by an area within pixels (x, y, width, height), wherein the area is defined with upper left corner, and width and height). Yet, alternatively the zoomed portion of the image content can be represented by an area having a focus point (x, y) and where the zooming coefficient is k.

The application may be located on an imaging device, on a client device, on a server device, or on any other image processing device. The application obtains the information on the focus point and uses the information for creating a zoom effect for the image that is represented by the image data. The zoom effect is generated of image frames that have a same resolution. The image frames comprises image data in such a manner that each image frame comprises a more zoomed view of the image than the previous image starting from a frame containing a full content of the image and ending to a last frame containing a portion of the content of the image, which portion - according to an embodiment - corresponds an area near to the focus point. According to another embodiment, the last frame contains such portion of the image content that corresponds the end point of the zoom. The end point of the zoom may have been determined automatically or manually.

According to an embodiment, the file comprising at least the image data and the information on the focus point is received from a camera device. The image may have been captured by said camera device being targeted to a view and focused by a focus point. According to an embodiment, the focus point is determined automatically by the camera device. According to an embodiment, the focus point is determined manually by the photographer selecting a certain location or point in the view by using a user interface of the camera. Also information on the end point of the zoom may be determined. The determination may be based on automatic determination based on a certain object in the view or manual determination made by the photographer.

The image being captured by the camera is stored as an image file. In addition to the image data, the file stores information on the focus point and the end point of the zoom if available. This information can be stored as a metadata of the file. The captured image can be shared to another user having the application for generating the zoom effect, or processed in said camera device having said application for generating the zoom effect. When viewing the image, the viewing application enables automatic zooming of the picture from a full screen towards the focus point.

According to an embodiment, the application is a video maker that generates e.g. a MPEG (Moving Picture Experts Group) video of the image frames, which video thus shows the zooming process. According to an embodiment, the video showing the zooming process is generated at the time the image is captured and stored.

Instead of video maker, the viewing application may be a still image viewer that is configured to decode the still image representation of the image frames generating the zoom effect. According to an embodiment, the viewing application may simply read the focus point information from the metadata of the image file and automatically performing a smooth zoom from full view to the focus point. Such an operation looks like a video for a viewing user.

The camera device may have higher resolution than what is needed for viewing the zoomed image, so that the resolution of the image in the zooming will be constant without pixelization. Pixelization occurs when a image of low resolution is zoomed, and single pixels are seen as squares. For example, if the images from the camera device have resolution of 10000*7000 pixels, and the zoomed image has resolution of 1000*700 pixels, the resolution of zoom effect may be 1000*700 pixels at the maximum. This prevents the pixelization.

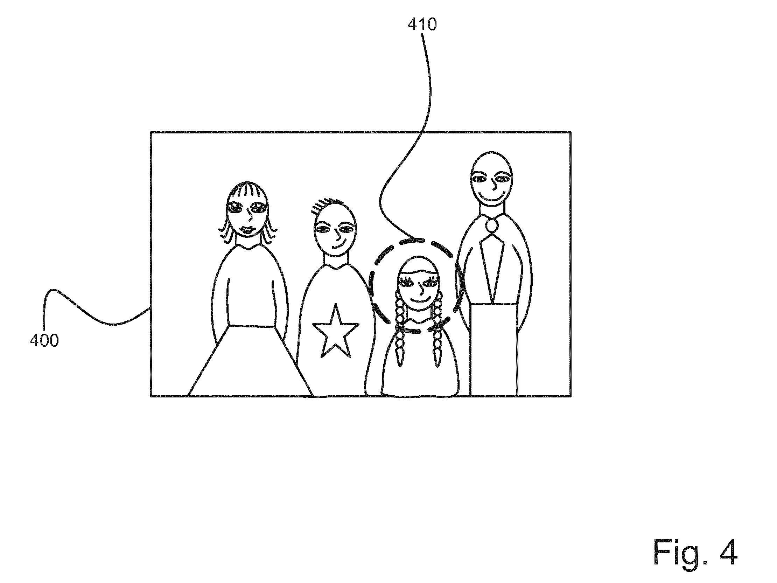

The embodiments from a photographer's (i.e. user's) point of view is illustrated in Figure 4. A user has a camera device targeted to a view 400 that is to be captured by the camera device. The view 400 is displayed on a viewer of the camera device to give the user a possibility to adjust the imaging settings. On the viewer is also shown a focus point 410 that is determined automatically by the camera device or zoomed by the user. For example, if the user defines a target zoom area manually zooming to a certain level, the currently visible view can be set to be the end point of the zoom in addition to the focus point 410.

The focus point 410 points to a certain area or object or part of an object in the view 400. When the user taps (or selects, activates, presses) the capturing button, the camera captures the picture of the view 400. In addition to this, the camera roll viewer continues to zoom gently towards the focus point 410 of the capture without any further user action. The user can tap the view (or a capturing button) any time to stop the zooming to have the end point for the zoom, which makes the camera viewer to return to the full view 400. The image can then be stored with the information on the focus point with or without the information on the end point of the zoom. The image can also be shared for further use.

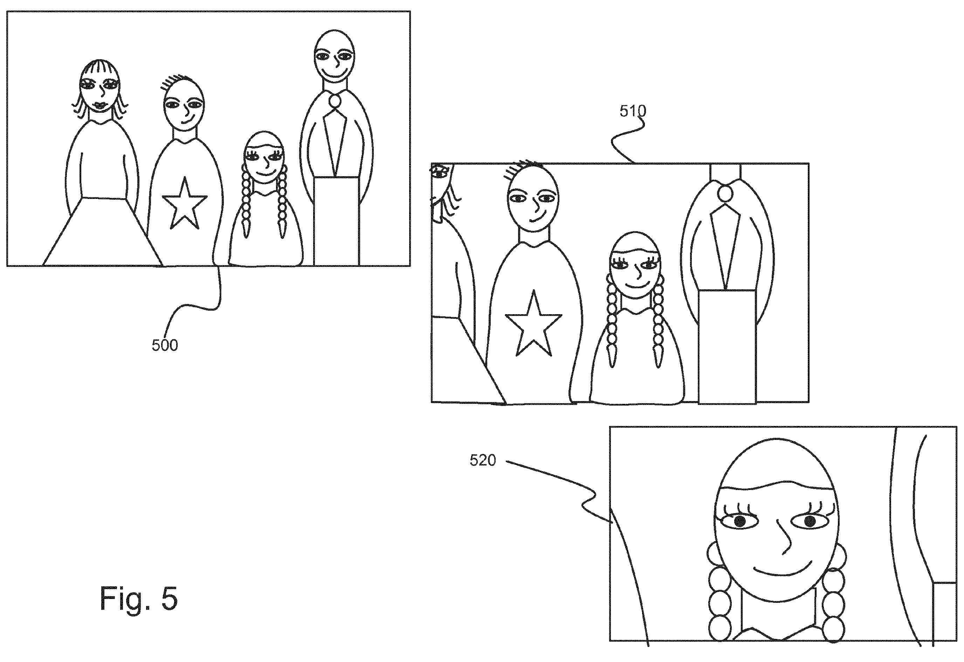

The image is then received by an application that generates the smooth zoom effect. This is illustrated in Figure 5 in a simplified manner. The zoom effect is generated so that the image is split into frames 500, 510, 520 having a same resolution. Each image frame 510, 520 comprises a more zoomed view than the previous image 500, 510 starting from a full image 500 and ending to an image 520 showing an area near to the focus point. This means that the first frame 500 comprises the full content of the image, while the last frame 520 comprises a zoomed portion of the image content. The last frame can be determined according to a focus point, for example a certain area around the focus point. The last frame can also be determined according to an end point of a zoom and the information on the focus point. According to an embodiment, the last frame is selected to contain a certain object, e.g. a face.

This representation of frames 500, 510, 520 may be stored as a video, as a video clip (for example 6-10 seconds) showing the zooming process from the full view 500 towards the focus point 520. After or together with the storing, the image can also be shared to other users. When sharing, the user may add a caption to the image. This caption is also stored to a metadata of the image file and displayed with the image when viewed.

An embodiment from an image viewer's point of view is disclosed also with reference to Figure 5. The viewer opening the stored or shared image uses a viewing application for opening the image. Depending on the format how the image was stored, the image is viewed accordingly. For example, the image as a video clip is shown as a video showing the zooming process from a full view to the focus point. Alternatively, the image as a still image is shown by reading the information on the focus point, and the performing a smooth zoom from a full view to the focus point by the viewing application while the viewing user is viewing the image. In both cases, the image viewing begins from the full view 500. Then the image is slightly zoomed towards the content 520 that is indicated by the focus point with or without the information on the end point of the zoom. Between the full content 500 and the zoomed content 520, there are several "frames" 510 that comprise ever closer-getting content.

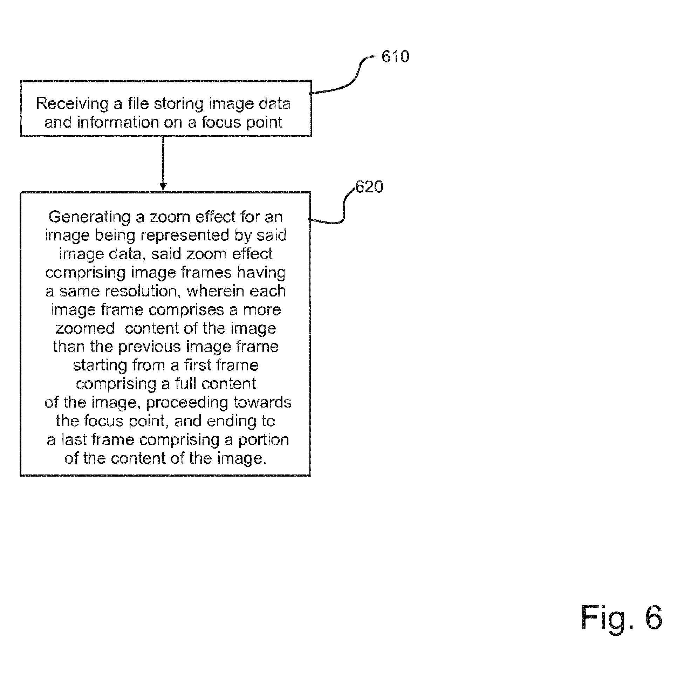

A method according to an embodiment is illustrated in Figure 6. In the method, a file storing at least image data and information on a focus point is received 610. Then a zoom effect for an image being represented by said image data is generated. The zoom effect comprises image frames having a same resolution, wherein each image frame comprises a more zoomed view of the image than the previous image frame starting from a frame that contains the full content of image and ending to a frame containing a portion of the content of the image, which portion may e.g. correspond an area near to the focus point.

As said, the last frame of the zooming effect can be selected automatically to be the frame comprising a portion of the image content, which portion corresponds the area near to the focus point or an area defined by an information on the end point of a zoom. The automatic selection of the last frame for the zooming effect can further be expanded so that the last frame is a frame that contains a certain object of the image. For example, by utilizing known object recognition algorithms, a frame that contains a face is automatically selected as the last frame and the zooming effect is ended there.

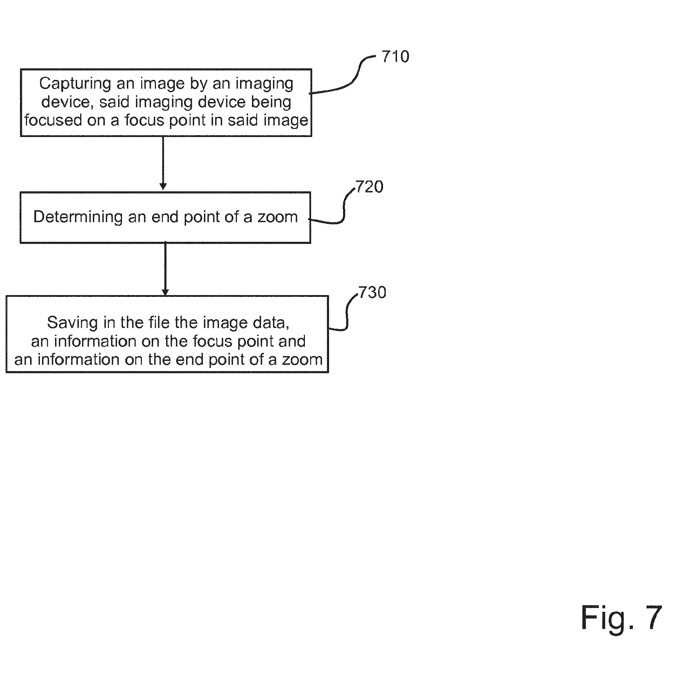

An image capturing method is illustrated in Figure 7. In the method the image is captured 710 by an imaging device, said imaging device being focused on a focus point in said image. An end point of a zoom is determined 720, and the image data, an information on the focus point and an information of the end point of a zoom are saved in a file.

The present embodiments provide a solution that gives a photographer a possibility to express his/her message with the image even more allowing details to be dug out from the photos and making the otherwise still image "live" hence amplify the experience.

It is appreciated that the methods illustrated in Figure 6 and 7 can be implemented in a same apparatus, or in different apparatuses, that captures the image. The apparatus comprises at least one processor, memory including computer program code, the memory and the computer program code configured to, with the at least one processor, cause the apparatus to perform at least the method shown in Figure 6 or Figure 7. An apparatus according to an embodiment comprises processing means and memory means and means for performing the method shown in Figure 6 and/or Figure 7.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

It is obvious that the present invention is not limited solely to the above-presented embodiments, but it can be modified within the scope of the appended claims.

## Claims

1. A method, comprising:
- receiving a file storing at least image data and information on a used focus point;
- generating a zoom effect for an image being represented by said image data, said zoom effect comprising image frames having a same resolution, wherein each image frame comprises a more zoomed content of the image than the previous image frame starting from a first frame comprising substantially a full content of the image, proceeding towards the focus point and ending to a last frame comprising a portion of the content of the image.

2. The method according to claim 1, wherein the last frame is determined by an elapsed time from the start of the zoom, which time is automatically or manually set.

3. The method according to claim 1 or 2, wherein the file being received comprises also information on an end point of zoom, wherein the last frame comprises such portion of the content that corresponds the end point of the zoom.

4. The method according to any of the claims 1 to 3, further comprising rendering the image frames to a display device.

5. The method according any of the claims 1 to 4, further comprising generating a video file of said image frames.

6. The method according to any of the previous claims 1 to 5, wherein the resolution of the frames is selected to be the same or less than the resolution of the area near the focus point.

7. The method according to any of the previous claims 1 to 6, wherein the file is received from an imaging device.

8. The method according to any of the previous claims 3 to 7, wherein at least one of the information on the focus point and the end point of the zoom is stored to a metadata of the file.

9. An apparatus comprising at least one processor, memory including computer program code, the memory and the computer program code configured to, with the at least one processor, cause the apparatus to perform at least the following:
- receiving a file storing image data and information on a used focus point;
- generating a zoom effect for an image being represented by said image data, said zoom effect comprising image frames having a same resolution, wherein each image frame comprises a more zoomed content of the image than the previous image frame starting from a first frame comprising substantially a full content of the image, proceeding towards the focus point and ending to a last frame comprising a portion of the content of the image.

10. The apparatus according to claim 9, wherein the file being received comprises also information on an end point of zoom, wherein the last frame comprises such portion of the content that corresponds the end point of the zoom.

11. The apparatus according to claim 9 or 10, further comprising computer program code to cause the apparatus to render the image frames to a display device.

12. The apparatus according to claim 9 or 10 or 11, further comprising computer program code to cause the apparatus to generate a video file of said image frames.

13. The apparatus according to any of the previous claims 9 to 12, wherein the resolution of the frames is selected to be the same or less than the resolution of the area near the focus point.

14. The apparatus according to any of the previous claims 9 to 13, wherein the file is received from an imaging device.

15. The apparatus according to any of the previous claims 10 to 14, wherein at least one of the information on the focus point and the end point of the zoom is stored to a metadata of the file.

16. A computer program product embodied on a non-transitory computer readable medium, comprising computer program code configured to, when executed on at least one processor, cause an apparatus or a system to perform the steps of the method as claimed in any of the claims 1 to 8.
